(19) Europäisches Patentamt
European Patent Office
Office européen des brevets

(11) Veröffentlichungsnummer: **0 183 651**
**B1**

(12) # EUROPÄISCHE PATENTSCHRIFT

(45) Veröffentlichungstag der Patentschrift: **23.05.90**

(51) Int. Cl.$^5$: **C 09 B 45/14,** C 08 K 5/23

(21) Anmeldenummer: **85810560.4**

(22) Anmeldetag: **25.11.85**

(54) **Neue Metallkomplexe, Verfahren zu deren Herstellung und Verwendung.**

(30) Priorität: **30.11.84 CH 5711/84**

(43) Veröffentlichungstag der Anmeldung:
**04.06.86 Patentblatt 86/23**

(45) Bekanntmachung des Hinweises auf die Patenterteilung:
**23.05.90 Patentblatt 90/21**

(84) Benannte Vertragsstaaten:
**BE CH DE FR GB IT LI NL**

(56) Entgegenhaltungen:
**DE-C- 917 632**
**US-A-2 921 061**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG**
**Klybeckstrasse 141**
**CH-4002 Basel (CH)**

(72) Erfinder: **Lienhard, Paul, Dr.**
**Kirschgartenstrasse 14**
**CH-4402 Frenkendorf (CH)**

(56) Entgegenhaltungen:
**CHEMICAL ABSTRACTS, Band 85, Nr. 24, 13. Dezember 1976, Seite 60, Zusammenfassung Nr. 178829v, Columbus, Ohio, US; R. GARVANSKA et al.: "Composition for thermal stabilization of polycaproamide", & GOD. VISSH. KHIM.-TEKHNOL. INST., SOFIA 1973, 21(3), 259-66**

**EP 0 183 651 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

1. Die Erfindung betrifft neue 1:1-Metallkomplexe aus zweiwertigem Nickel, Kupfer, Kobalt und/oder Zink und einer Azoverbindung der Formel (1)

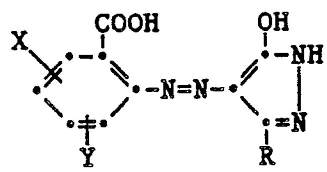

(1),

worin X ein H- oder Chloratom, eine Methyl-, Nitro-, $C_2$—$C_5$-Alkanoylamino-, eine gegebenenfalls durch Chloratome, $C_1$—$C_5$-Alkyl- oder Alkoxygruppen substituierte Phenoxy- oder Benzoylaminogruppe, Y ein H- oder Chloratom und R eine Methyl- oder $C_2$—$C_3$-Alkoxycarbonylgruppe bedeuten.

1:1-Metallkomplexe, insbesondere 1:1-Chromkomplexe von Azoverbindungen aus diazotierten o-Aminophenolen, die zugleich Chloratome und Nitrogruppen als Kernsubstituenten enthalten, und 3-Methyl-5-pyrazolon sind als in organischen Lösungsmitteln lösliche Farbstoffe aus der DE—PS 917 632 bekannt.

In C.A. *85,* Nr. 24 (1976), 178 829 v, beschreiben R. Garvanska et al. eine Polycaprolactamsusammensetzung, bei welcher durch Zugabe von 0,5% eines 1:1-Cu-Komplexes einer Azoverbindung der Formel

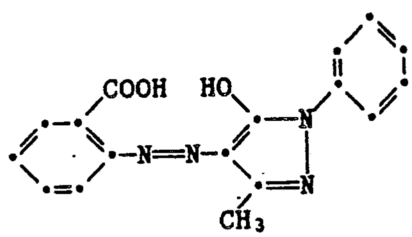

0,5% Kaliumjodid und 0,25% $NaH_2PO_4$, bezogen auf das Polycaprolactam, eine erhebliche Verbesserung der Hitzestabilität erzeilt wird.

Es wurde nun gefunden, dass die oben definierten erfindungesgemässen Metallkomplexe sich durch überraschend gute Pigmenteigenschaften auszeichnen.

Stellt X eine Phenoxygruppe dar, dann beispielsweise eine gegebenenfalls durch Chloratome, Methyl-, Methoxy- oder Aethoxygruppen substituierte Phenoxygruppe.

Bedeutet X eine $C_2$—$C_5$-Alkanoylaminogruppe, dann beispielsweise eine Acetylamino- oder Propionylaminogruppe. Bedeutet es eine Benzoylaminogruppe, dann beispielsweise eine unsubstituierte oder durch Chloratome, Methyl- oder Methoxygruppen substituierte Benzoylaminogruppe.

Falls R für eine $C_2$—$C_5$-Alkoxycarbonylgruppe steht, dann beispielsweise für eine Carbomethoxy- oder Carbäthoxygruppe.

Als Metalle kommen insbesondere $Ni^{2+}$ und $Cu^{2+}$ in Frage. Es kommen ferner Mischungen von Metallkomplexen in Betracht, beispielsweise Mischungen von Ni- und Zn- oder von Co- und Zn-Komplexen oder aber Ni-Komplexe aus Mischungen zweier Azoverbindungen der Formel (1).

Bevorzugt sind Metallkomplexe von Azoverbindungen der Formel (1), worin X ein H-Atom, eine sich in p-Stellung zur Carboxylgruppe befindliches Chloratom, oder eine sich in p-Stellung zur Azogruppe befindliche Phenoxygruppe,

Y ein H-Atom und

R eine Methylgruppe und das Metall Nickel oder Kupfer bedeuten.

Zu den erfindungsgemässen Metallkomplexen von Azoverbindungen der Formel (1) gelangt man, indem man eine Azoverbindung der Formel (1) mit Mitteln behandelt, die zweiwertiges Nickel, Kupfer, Kobalt oder Zink abgeben.

Die Azoverbindungen der Formel (1) erhält man durch Kuppeln der Diazoverbindung einer Aminobenzoesäure der Formel (2)

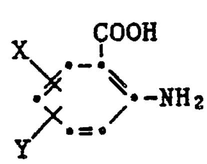

(2)

mit einem Pyrazolon der Formel (3)

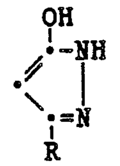

(3).

Als Beispiele von Aminobenzoesäuren der Formel (2) seien genannt:
2-Aminobenzoesäure,
2-Amino-3-, -4-, -5-, oder -6-chlor-benzoesäure,
2-Amino-4-nitro-benzoesäure,
2-Amino-5-nitro-benzoesäure,
2-Amino-6-nitro-benzoesäure,
2-Amino-5-acetylamino-benzoesäure,
2-Amino-3-methyl-benzoesäure,
2-Amino-5-methyl-benzoesäure,
2-Amino-6-methyl-benzoesäure,
2-Amino-5-phenoxy-benzoesäure,
2-Amino-5-benzoylamino-benzoesäure,
2-Amino-5-(4'-methoxyphenoxy-benzoesäure,
2-Amino-5-(2',4'-dichlorphenoxy)-benzoesäure,
2-Amino-5-(3'-methylphenoxy-benzoesäure,
2-Amino-5-propionylamino-benzoesäure,

Dabei handelt es sich um bekannte Verbindungen oder um Verbindungen, die nach bekannten Methoden leicht zugänglich sind.

Als Beispiele von Pyrazolonen der Formel (3) seien genannt:
3-Methyl-5-pyrazolon,
3-Carbäthoxy-5-pyrazolon,
3-Carbomethoxy-5-pyrazolon.

Auch hier handelt es sich um bekannte Verbindungen.

Die Diazotierung der Aminobenzoesäuren und deren Kupplung mit den Pyrazolonen erfolgt in bekannter Weise.

Für die Metallisierung werden die entsprechenden Metallsalze wie die Chloride, Sulfate, Nitrate oder Acetate eingesetzt, beispielsweise Nickel-, Kupfer-, Kobalt- oder Zinkacetat, -chlorid, -sulfat, -nitrat, oder -phosphat. Es kann auch mit Koordinationsverbindungen der genannten Uebergangsmetalle wie beispielsweise Nickel-acetyl-acetonat oder Kupfer-tetraminosulfat gearbeitet werden. Dabei werden zweckmässig organische Lösungsmittel verwendet.

Als Lösungsmittel seien beispielsweise genannt: Methanol, Aethanol, Butanol, Aethylenglykol, Aethylenglykolmonomethyläther, Aethylenglykolmonoäthyläther, Dimethylformid, Nitrobenzol, Dichlorbenzol, Toluol und Eisessig. Gemische von organischen Lösungsmitteln, von organischen Lösungsmitteln mit Wasser, sowie Wasser allein können hierfür auch verwendet werden.

Die Reaktion geht bei erhöhter Temperatur vor sich, vorzugsweise zwischen 50°C und dem Siedepunkt des verwendeten Lösungsmittels bzw. Lösungsmittelgemisches.

Die so erhaltenen Metallkomplexe lassen sich leicht durch Filtration isolieren. Allfällige Verunreinigungen können durch Auswaschen entfernt werden.

Je nach Art ihrer Substituenten und des zu färbenden Polymeren können die Metallkomplexe der Azoverbindungen der Formel (1) als polymerlösliche Farbstoffe oder insbesondere als Pigmente verwendet werden. Im letzteren Falle ist es vorteilhaft, die bei der Synthese anfallenden Produkte in eine feindisperse Form überzuführen. Dies kann auf verschiedene Weise geschehen, so beispielsweise durch Mahlen oder Kneten, zweckmässig in Gegenwart von Mahlhilfsmitteln, wie anorganischen oder organischen Salzen mit oder ohne Zusatz organischer Lösungsmittel. Nach dem Mahlen werden die Hilfsmittel wie üblich entfernt, lösliche anorganische Salze z.B. mit Wasser und wasserunlösliche organische Lösungsmittel beispielsweise durch Wasserdampfdestillation.

Es kann sich als zweckmässig erweisen, die Metallkomplexe der Azoverbindungen der Formel (1) mit organischen Lösungsmitteln, vorzugsweise mit solchen, die über 100°C sieden, nachzubehandeln.

Als besonders geeignet hierfür erweisen sich durch Halogenatome, Alkyl- oder Nitrogruppen substituierte Benzole, wie Xylole, Chlorbenzol, o-Dichlorbenzol oder Nitrobenzol sowie Alkohole, wie Isopropanol oder Isobutanol, ferner Ketone, wie Cyclohexanon, Aether wie Aethylenglykolmonomethyl- oder -monoäthyläther, Amide, wie Dimethylformamid oder N-Methyl-pyrrolidon, sowie Dimethylsulfoxyd, Sulfolan oder Wasser allein, gegebenenfalls unter Druck. Man kann die Nachbehandlung auch in Wasser in Gegenwart von organischen Lösungsmitteln und/oder mit Zusatz von oberflächenaktiven Substanzen oder aliphatischen Aminen oder in flüssigem, Ammoniak durchführen.

Durch die oben erwähnten Nachbehandlungen lassen sich die Metallkomplexe der Azoverbindungen der Formel (1) bezüglich ihrer Korngrösse und ihrer Pigmenteigenschaften wie Farbstärke, Migrations-, Licht- und Wetterbeständigkeit sowie Deckkraft bzw. Transparenz steuern bzw. optimieren.

Je nach Verwendungszweck erweist es sich als vorteilhaft, die Pigmente als Toner oder in Form von Präparaten zu verwenden.

Das erfindungsgemäss zu färbende hochmolekulare organische Material kann natürlicher oder künstlicher Herkunft sein. Es kann sich z.B. um Naturharze oder trocknende Oele, Kautschuk oder Casein oder um abgewandelte Naturstoffe wie Chlorkautschuk, ölmodifizierte Alkydharze, Viscose, um Celluloseacetobutyrat oder Nitrocellulose handeln, insbesondere aber um vollsynthetische organische Polymere (Duroplaste und Thermoplaste), wie sie durch Polymerisation, Polykondensation oder Polyaddition erhalten werden. Aus der Klasse der Polymerisationsharze seien in erster Linie genannt, Polyolefine, wie Polyäthylen, Polypropylen, oder Polyisobutylen, ferner substituierte Polyolefine, wie Polymerisate aus Vinylchlorid, Vinylacetat, Styrol, Acrylnitril, der Acrylsäure- und/oder Methacrylsäureester oder Butadien, sowie Kopolymerisate der erwähnten Monomeren, insbesondere ABS oder EVA.

Aus der Reihe der Polyadditionsharze und Polykondensationsharze seien die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste, die als Lackharze verwendeten Polyester, und zwar sowohl gesättigte, wie z.B. Alkydharze, als auch ungesättigte, wie beispielsweise Maleinatharze, ferner die linearen Polyester und Polyamide oder Silikone genannt.

Die erwähnten hochmolekularen Verbindungen können einzeln oder in Gemischen, als plastische Massen oder Schmelzen, die gegebenenfalls zu Fasern versponnen werden können, vorliegen.

Sie können auch in Form ihrer Monomeren oder im polymerisierten Zustand in gelöster Form als Filmbildner oder Bindemittel für Lacke oder Druckfarben vorliegen, wie z.B. Leinölfirnis, Nitrocellulose, Alkydharze, Melaminharze und Harnstoff-Formaldehydharze oder Acrylharze.

Die Pigmentierung der hochmolekularen, organischen Substanzan mit den Metallkomplexen der Azoverbindungen der Formel (1) erfolgt beispielsweise derart, dass man ein solches Pigment gegebenenfalls in Form von Masterbatches, diesen Substraten unter Verwendung von Walzwerken, Misch- oder Mahlapparaten zumischt. Das pigmentierte Material wird hierauf nach an sich bekannten Verfahren wie Kalandrieren, Pressen, Strangpressen, Streichen, Verspinnen, Giessen oder durch Spritzguss in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können im erfindungsgemässen Verfahren vor oder nach der Einverleibung des Pigmentfarbstoffes in die Polymeren eingearbeitet werden. Es ist ferner möglich, zwecks Erzielung verschiedener Farbtöne den hochmolekularen, organischen Stoffen neben den Metallkomplexen der Azoverbindungen der Formel (1) noch Füllstoffe bzw. andere farbgebende Bestandteile wie Weiss-, Bunt- oder Schwarzpigmente in beliebigen Mengen zuzufügen.

Von besonderer Bedeutung ist die Verwendung der erfindungsgemässen Farbkörper zum Farben von Kunststoffbauteilen (engineering Plastics) z.B. solchen aus Polyamiden, Polycarbonaten, Polyestern, wie Polybutylterephthalat oder Polymerisation bzw. Mischpolymerisaten, wie ABS, in der Masse. Die Farbkörper sind ferner besonders geeignet zur Massefärbung von Polykondensat- oder Polymerisatfasern wie Polycaprolactam und besonders Polyolefinfasern wie Polypropylenfasern.

Zum Pigmentieren von Lacken und Druckfarben werden die hochmolekularen organischen Materialien und die Metallkomplexe der Azoverbindungen der Formel (1) gegebenenfalls zusammen mit Zusatzstoffen wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die Metallkomplexe der Azoverbindungen der Formel (1) können die damit gefärbten Polymeren gegen die Einflüsse von Licht und Wetter stabilisieren. Dies ist von besonderer Bedeutung, wenn die gefärbten Polymeren, insbesondere Polypropylen, zu Fasern verabeitet werden.

Werden die erfindungsgemäss zu verwendenden Metallkomplexe in lichtstabilisiertes hochmolekulares organisches Material eingearbeitet, so wird in der Regel dessen Lichtstabilität nicht beeinträchtigt. Gegebenenfalls lässt sich auch eine synergistische Verbesserung der Lichtstabilität beobachten.

Die erhaltenen Färbungen enthalten vorzugsweise 0,01—20 Gew.% des Metallkomplexes einer Azoverbindung der Formel (1), beispielsweise in Kunststoffen, Fasern, Lacken und Drucken, und zeichnen sich durch gute Dispergierbarkeit, Ueberlackier-, Migrations-, Hitze-, Lichte- und Wetterbestädigkeit, gute Farbstärke sowie durch einen guten Glanz aus. In der Masse gefärbte Fasern zeichnen sich zusätzlich durch gute Nass- und Reibechtheiten aus.

In den nachfolgenden Beispielen bedeuten die Teile, sofern nichts anderes angegeben wird, Gewichtsteile und die Prozente Gewichtsprozente. Temperaturen sind in °C angegeben.

Beispiel 1: 26,8 g 3-Methyl-4-(2′-carboxy-phenylazo)-5-pyrazolon-Mononatriumsalz werden in 1000 ml Aethanol angeschlämmt, mit 14,9 g Nickelacetat-Tetrahydrat versetzt und die Mischung 4 Std. unter Rückfluss gekocht. Nach Erkaltenlassen auf 40° wird filtriert, das Produkt mit Aethanol gewaschen und im Vakuum, getrockner. Man erhält 15 g eines braunen Pulvers. Dieses enthält gemäss Analyse pro Molekül Azokörper 1 Atom Nickel und 1—2 Moleküle Wasser. Eine der möglichen isomeren Formeln ist die Folgende:

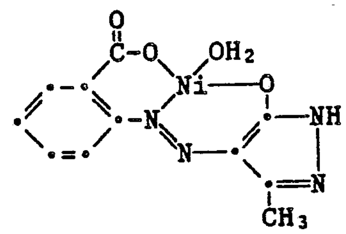

Beispiel 2: Eine Anschlämmung von 24,6 g 3-Methyl-4-(2′-carboxy-phenylazo)-5-pyrazolon in 1500 ml warmen Wasser wird mit 27,4 g Nickelacetat-Tetrahydrat versetzt und 5 Stunden bei 90—95° gerührt. Der Nickelkomplex wird heiss abfiltriert, mit Wasser gewaschen und in Vakuum getrocknet. Es fallen 24 g eines braunen Pigmentes an von der gleichen Zusammensetzung wie das nach Beispiel 1 hergestellte Produkt.

Beispiel 3: 24,6 g 3-Methyl-4-(2′-carboxy-phenylazo)-5-pyrazolon in werden in 250 ml n-Butanol bei 80—85° suspendiert und tropfenweise mit einer Lösung von 27,4 g Nickelacetat-Tetrahydrat in 200 ml Wasser versetzt. Die Mischung wird 5 Stunden unter Rückfluss gekocht, unter Rühren erkalten gelassen und filtriert. Das Nutschgut wird mit Wasser sowie n-Butanol gewaschen und im Vakuum getrocknet. Man erhält 30 g des 1:1-Nickelkomplexes.

Beispiel 4: Zu einer heissen Lösung von 24,6 g 3-Methyl-4-(2′-carboxy-phenylazo)-5-pyrazolon in 1500 ml Wasser und 20 ml 10 N Natronlauge tropft man die Lösung von 20 g Kupferacetat-Hydrat in 400 ml Wasser. Man rührt die Mischung 5 Stunden bei 90—95°, wobei das Produkt ausfällt. Nach dem Abfiltrieren wird es mit warmen Wasser gewaschen und im Vakuum getrocknet. Man erhält 27,5 g eines braunen Pulvers, das pro Molekül Azoverbindung ein Atom Cu enthält. Ausfärbungen des feinverteilten Pigmentes in PVC sind gelb gefärbt.

Beispiel 5: 28,1 g 3-Methyl-4-(2′-carboxy-5′-chlor-phenylazo)-5-pyrazolon werden in 1600 ml Wasser und 10 ml 10 N Natronlauge heiss gelöst, tropfenweise mit der Lösung von 27,4 g Nickelacetat-Tetrahydrat in 300 ml Wasser versetzt und die Mischung 4 Stunden bei 90—95° gerührt. Der ausgefallene 1:1-Nickelkomplex des Azokörpers wird abfiltriert, mit Wasser gewaschen und im Vakuum getrocknet. Gewicht: 33 g. In feiner Verteilung färbt das Pigment PVC in gelben Tönen.

Beispiel 6—20: Ebenfalls farbstarke, echte Pigmente erhält man bei einer zu den Beispielen 1—6 analogen Arbeitsweise, wenn man eine Azoverbindung der Formel (4) in Tabelle 1 mit einem Metallsalz zum 1:1-Metallkomplex (M in Kolonne 4) umsetzt. Der Farbton von PVC-Ausfärbungen ist in Kolonne 5 angegeben.

Tabelle 1: 1:1-Metall-Komplex aus

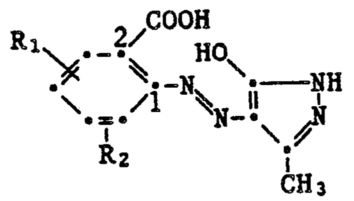

(4)

| Beisp. Nr. | $R_1$ | $R_2$ | M | Farbton in PVC |
|---|---|---|---|---|
| 6 | 5-Cl | H | Cu | gelb |
| 7 | 4-Cl | 6-Cl | Cu | gelb |
| 8 | 4-Cl | 6-Cl | Ni | gelb |
| 9 | 4-$NO_2$ | H | Cu | gelb-braun |
| 10 | 4-$NO_2$ | H | Ni | orange |
| 11 | 5-$NO_2$ | H | Cu | gelb |
| 12 | 5-$NO_2$ | H | Ni | gelb-orange |
| 13 | 4-$NHCOCH_3$ | H | Cu | braun |
| 14 | 4-$NHCOCH_3$ | H | Ni | gelb-orange |
| 15 | 4-$OC_6H_5$ | H | Cu | gelb-braun |
| 16 | 4-$OC_6H_5$ | H | Ni | gelb |
| 17 | 4-Cl | H | Cu | gelb-braun |
| 18 | 4-Cl | H | Ni | gelb-orange |
| 19 | 4-$NHCOC_6H_5$ | H | Cu | braun |
| 20 | 4-$NHCOC_6H_5$ | H | Ni | gelb-orange |

Beispiel 21: 26,8 g 3-Methyl-4-(2'-carboxy-phenylazo)-5-pyrazolon-monoatriumsalz werden in 300 ml n-Butanol angeschlämmt und mit der Lösung von 27,4 g Kobalt (II)-acetat-tetrahydrat in 300 ml Wasser versetzt. Die Mischung wird 3 Stunden unter Rückfluss gekocht, abgekühlt und filtriert. Das Nutschgut wird mit n-Butanol, dann mit Wasser gewaschen und im Vakuum getrocknet. Das Produkt wiegt 27,6 g. Nach Mahlung färbt es PVC und Lacke in gelb-orangen Tönen mit sehr guter Migrations- und Lichtechtheit.

Beispiel 22: Verfährt man wie in Beispiel 21 beschrieben, ersetzt jedoch das Kobaltacetat durch die aequimolekulare Menge Zinkacetat, so erhält man 29 g eines Pigmentes, das PVC und Lacke in reinen gelben Tönen färbt.

Beispiel 23: 6,86 g 2-Carboxy-anilin und 8,58 g 2-Carboxy-4-chloranilin, gelöst in 30 ml 10N HCl und Wasser, werden durch Zugabe von 6.9 g Natriumnitrit bei 0—5° diazotiert. Dann wird die Lösung von 10,36 g 3-Methyl-5-pyrazolon in 11 ml 10N NaOH und Wasser zugetropft und die Mischung mit Natriumacetat auf pH 4—5 eingestellt. Die so gebildeten gelben Azoverbindungen werden abfiltriert, mit Wasser gewaschen und hierauf wiederum in Wasser angeschlämmt. Man gibt die wässrige Lösung von 24,9 g Nickelacetat-tetrahydrat zu und rührt die Mischung einige Stunden bei 90—95°. Dann filtriert man, wäscht das Produkt mit Wasser und trocknet es im Vakuum. Bereits nach kurzer Mahlung liefert es in PVC und Lacken gelbe Ausfärbungen von hoher Farbstärke.

Beispiel 24: Ein ebenfalls wertvolles Pigment erhält man bei gleicher Arbeitsweise wie Beispiel 23, ausgehend von 12,34 g 2-Carboxy-analin und 1,72 g Carboxy-4-chlor-analin.

Beispiel 25—38: Ebenfalls gelbe bis orange-braune Färbungen erhält man aus den Pigmenten der Tabelle 2. Es handelt sich um 1:1-Metallkomplexe (Metall der Kolonne M) aus Azoverbindungen der Formel (5), enthaltend die in Tabelle 2 angegebenen Substituenten $R_1$—$R_3$.

Tabelle 2: 1:1 Metallkomplexe aus

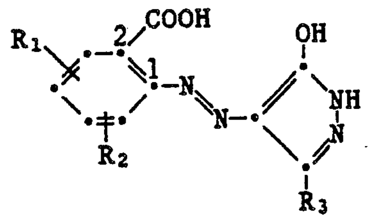

(5)

| Beisp. Nr. | $R_1$ | $R_2$ | $R_3$ | M |
|---|---|---|---|---|
| 25 | 4-Cl | H | $CH_3$ | Zn |
| 26 | 4-Cl | H | $CH_3$ | Co |
| 27 | 5-Cl | 6-Cl | $CH_3$ | Ni |
| 28 | 6-Cl | H | $CH_3$ | Cu |
| 29 | $3-CH_3$ | H | $COOC_2H_5$ | Ni |
| 30 | $4-CH_3$ | H | $COOC_2H_5$ | Ni |
| 31 | $6-CH_3$ | H | $COOC_2H_5$ | Ni |
| 32 | H | H | $COOC_2H_5$ | Cu |
| 33 | H | H | $COOC_2H_5$ | Ni |
| 34 | $4-NHCOCH_3$ | H | $CH_3$ | Ni |
| 35 | $4-NHCOC_2H_5$ | H | $CH_3$ | Ni |
| 36 | $4-NHCOC_2H_5$ | H | $CH_3$ | Cu |
| 37 | $3-NO_2$ | H | $CH_3$ | Ni |
| 38 | 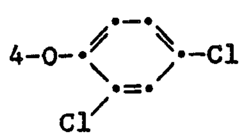 | H | $CH_3$ | Ni |

Beispiel 39: 65 g stabilisiertes Polyvinylchlorid, 35 g Dioctylphthalat und 0,2 g des nach Beispiel 1 hergestellten, feinverteilten Nickelkomplexes werden miteinder verrührt und auf einem Zweiwalzenkalander 7 Minuten bei 160° gewalzt. Man erhält eine gelbgefärbte Folie von sehr guter Licht- und Migrationsbeständigkeit.

Herstellung der feinverteilten Form des Nickelkomplexes: 25 g Nickelkomplex, 100 g feingemahlenes Natriumchlorid und 30 g Diacetonalkohol werden zusammen während 5 Stunden unter Kühlung in einem Laboratoriumskneter geknetet. Man gibt die Mischung in 4000 ml Wasser und filtriert die entstandene Suspension ab. Man wäscht das isolierte Pigment mit Wasser und trocknet es im Vakuum bei 80°C.

Beispiel 40: 10 g Titandioxyd und 2 g Nickelkomplex gemäss Beispiel 1 werden mit 88 g einer Mischung von 26,4 g Kokosalkydharz, 24,0 g Melamin-Formaldehydharz (50% Festkörpergehalt), 8,8 g Aethylenglykolmonomethyläther und 28,8 g Xylol während 48 Stunden in einer Kugelmühle vermahlen. Wird dieser Lack auf eine Aluminiumfolie gespritzt, 30 Minuten bei Raumtemperatur vorgetrocknet und dann während 30 Minuten bei 120°C eingebrannt, dann erhält man eine gelbe Lackierung, die sich bei guter Farbstärke durch eine sehr gute Ueberlackier-, Licht- und Wetterbeständigkeit auszeichnet.

Beispiel 41: 4 g des fein verteilten Pigments gemäss Beispiel 1 werden in 20 g Lösungsmittel der folgenden Zusammensetzung eingerührt: 50 g Solvesso 150® (Gemisch aromatischer Kohlenwasserstoffe), 15 g Butylacetat, 5 g Exkin II® (Verlaufmittel auf Ketoximbasis), 25 g Methyl-isobutylketon und 5 g Silikonöl (1% in Solvesso 150®). Wenn die vollständige Feinverteilung erreicht ist (je nach Art des Rührens in ca. 15—60 Minuten), werden die Bindemittel zugesetzt, nämlich 48,3 g Baycryl L 530® (Acrylharz) (51% in Xylol/ Butanol 3:1) und 23,7 g Maprenal TTX® (Melaminharz) (55% in Butanol). Nach kurzem Homogenisieren

wird der Lack nach üblichen Methoden wie Spritzen und Tauchen oder speziell zur kontinuierlichen Beschichtung von Metallblechen im "Coil-Coating"-Verfahren appliziert und eingebrannt (Einbrennen 30 Minuten, 130°C). Die erhaltenen gelben Lackierungen zeichnen sich aus durch sehr guten Verlauf, hohen Glanz und gute Feinverteilung des Pigmentes, sowie durch gute Wetterbeständigkeiten.

Beispiel 42: 2 g Nickelkomplex gemäss Beispiel 1 werden mit 36 g Tonerdehydrat, 60 g Leinölfirnis von mittlerer Viskosität und 2 g Kobaltlinoleat auf dem Dreiwalzenstuhl angerieben. Die mit der entstehenden Farbpaste erzeugten gelben Drucke sind farbstark und gut lichtbeständig.

Beispiel 43: Ein zur Faserherstellung geeignetes Polypropylengranulat wird mit 2,5% eines Pigmentpräparates, ethaltend 40% Nickelkomplex gemäss Beispiel 1, gründlich gemischt. Die Mischung wird auf einer Schmelzspinnanlage bei 240—260°C zu Fäden versponnen, die anschliessend auf einer Streckzwirnanlage im Verhältnis 1:4 verstreckt und aufgespult werden. Man erhält eine kräftige gelbe Färbung, die sich durch gute Licht-, Wäsche-, Trockenreinigungs-, Abgas- und Peroxydbleichechtheiten auszeichnet. Bei sonst analoger Arbeitsweise erhält man ebenfalls sehr echte, gelbe Ausfärbungen, wenn man anstelle von Polypropylen- Polycaprolactam- oder Polyäthylenterephthalatgranulat verwendet, und die Mischung bei 260—290°C zu Fäden verspinnt.

Das oben eingesetzte Präparat wird folgt hergestellt:

40 g des gelben Pigmentes, 60 g Mg-Behenat und 500 g Natriumchlorid werden in einem Pulvermischer gründlich gemischt. Diese Mischung wird mit einer Laborknetmaschine bei 130°C bearbeitet. Das erhaltene Präparat wird mit Wasser vermahlen, filtriert, salzfrei gewaschen, getrocknet und pulverisiert.

Beispiel 44: 4 g gemahlener Nickelkomplex gemäss Beispiel 1 und 76 g eines Lackansatzes, bestehend aus 41,3% der 60%-igen Lösung eines wärmehärtigen Polyacrylates (Viacry VC 373® der Firma Vianova, Oesterreich) in Xylol, 16,3% der 55%-igen Lösung eines Melaminharzes (Maprenal TTX® der Cassella Farbwerke AG, BRD) in Butanol, 32,8% Xylol, 4,6% Aethylglykolacetat, 2% Cyclohexanon, 2% Butylacetat und 1% einer 1%-igen Siloconöl-Lösung in Xylol, werden 72 Stunden in einer Kugelmühle dispergiert.

8 g dieser Mischung und 20 g einer 2%-igen Aluminiumdispersion in Paraffin und Xylol werden gründlich vermischt und gleichmässig auf Blech gespritzt. Nach 30 minuten Vortrocknen wird 30 Minuten bei 120—130°C eingebrannt. Es entsteht eine kräftige gelbe Färbung mit sehr guter Wetterbeständigkeit.

**Patentansprüche**

1. 1:1-Metallkomplexe aus zweiwertigem Nickel, Kupfer, Kobalt und/oder Zink und einer Azoverbindung der Formel (1)

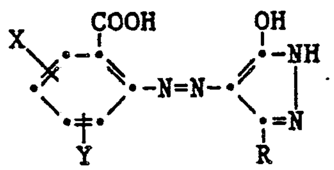

(1),

worin X ein H- oder Chloratom, eine Methyl-, Nitro-, $C_2$—$C_5$-Alkanoylamino, eine gegebebenfalls durch Chloratome, $C_1$—$C_4$-Alkyl- oder Alkoxygruppe substituierte Phenoxy- oder Benzoylaminogruppe, Y ein H oder Chloratom, R eine Methyl- oder $C_2$—$C_3$-Alkoxycarbonylgruppe bedeuten.

2. 1:1-Nickelkomplexe aus einer Azoverbindung der Formel (1) gemäss Anspruch 1, worin X ein H-Atom, ein sich in p-Stellung zur Carboxygruppe befindliches Chloratom, oder eine sich in p-Stellung zur Azogruppe befindliche Phenoxygruppe, Y ein H-Atom und R eine Methylgruppe bedeuten.

3. Verfahren zur Herstellung von Metallkomplexen gemäss Anspruch 1, dadurch gekennzeichnet, dass man eine Azoverbindung der Formel (1) mit Mitteln behandelt, die zweiwertiges Nickel, Kupfer, Kobalt und/ oder Zink abgeben.

4. Verfahren gemäss Anspruch 3, dadurch gekennzeichnet, dass man von Azoverbindungen der Formel (1) ausgeht, worin X, Y und R die in Anspruch 2 angegebene Bedeutung haben.

5. Verfahren zum Färben von hochmolekularem organischen Material, dadurch gekennzeichnet, dass ein Metallkomplex gemäss Anspruch 1 verwendet wird.

6. Verfahren zum Färben von Synthesefasern in der Masse, dadurch gekennzeichnet, dass ein Metallkomplex gemäss Anspruch 1 verwendet wird.

7. Verfahren gemäss Anspruch 6 zum Färben Polyolefin-, Polyamid- oder Polyesterfasern in der Masse, dadurch gekennzeichnet, dass ein Metallkomplex gemäss Anspruch 1 verwendet wird.

8. Hochmolekulares organisches Material enthaltend einen Metallkomplex gemäss Anspruch 1.

**Revendications**

1. Complexes métalliques 1:1 dérivant d'un métal bivalent pris dans l'ensemble constitué par le nickel, le cuivre, le cobalt et le zinc et d'un composé anzoïque répondant à la Formule (1):

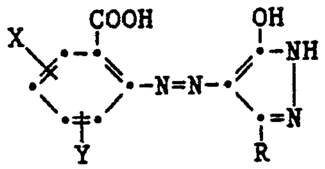

(1),

dans laquelle

X répresente un atome d'hydrogène ou de chlore, un méthyle, un nitro, un alcanoylamino en $C_2$—$C_5$, ou un radical phénoxy ou benzylamino éventuellement porteur d'atomes de chlore ou de radicaux alkyles ou alkoxy en $C_1$—$C_4$,

Y représente un atome d'hydrogène ou de chlore, et

R représente un méthyle u un alcoxycarbonyle en $C_2$ ou $C_3$.

2. Complexes de nickel 1:1 dérivant d'un composé azoïque de Formule (1) selon la revendication 1, complexes dans lesquels X représente un atome d'hydrogène, un atome de chlore occupant la position para relativement au radical carboxy, ou un radical phénoxy occupant la position para relativement au radical azo, Y représente un atome d'hydrogène et R représente un radical méthyle.

3. Procédé pour préparer des complexes métalliques selon la revendication 1, procédé caractérisé en ce qu'on traite un composé azoïque de Formule (1) par des agents cédant du nickel, du cuivre, du cobalt et/ou du zinc bivalents.

4. Procédé selon la revendication 3, caractérisé en ce qu'on part de composés azoïques de Formule (1) dans lesquels X, Y et R ont les significations qui leur int été données à la revendication 2.

5. Procédé pour teindre ou colorer une matière organique à haut poids moléculaire, procédé caractérisé en ce qu'on utilise un complexe métallique selon la revendication 1.

6. Procédé pour teindre des fibres synthétiques dans la masse, procédé caractérisé en ce qu'on utilise un complexe métallique selon la revendication 1.

7. Procédé selon la revendication 6 pour teindre dans la masse des fibres en polyoléfines, en polyamides ou en polyesters, procédé caractérise en ce qu'on utilise un complexe métallique selon la revendication 1.

8. Matière organique à haut poids moléculaire qui contient un complexe métallique selon la revendication 1.

**Claims**

1. A 1:1 metal complex of divalent nickel, copper, cobalt and /or zinc and an azo compound of the formula (1)

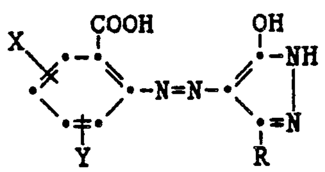

(1),

in which X is a hydrogen or chlorine atom, a methyl, nitro, $C_2$—$C_5$alkanoylamino group, or a phenoxy or benzylamino group, each unsubstituted or substituted by chlorine atoms or by $C_1$—$C_4$alkyl or $C_1$—$C_4$-alkoxy groups, and Y is a hydrogen or chlorine atome, and R is a methyl group or a $C_2$—$C_3$alkoxycarbonyl group.

2. A 1:1 metal complex of an azo compound of the formula (a) according to claim 1, in which X is a hydrogen atom, a chlorine atom which is situated in the para position to the carboxyl group, or a phenoxy group which is situated in the para position to the azo group, Y is a halogen atome, and R is a methyl group.

3. A process for the preparation of a metal complex according to claim 1, which comprises treating an azo compound of the formula (1) with an agent that donates divalent nickel, copper, cobalt and/or zinc.

4. A process according to claim 3, wherein the starting material is an azo compound of the formula (1), in which X, Y and R are as defined in claim 2.

5. A process for colouring high molecular weight organic material, which comprises the use of a metal complex according to claim 1.

6. A process for mass colouring synthetic fibres, which comprises the use of a metal complex according to claim 1.

7. A process according to claim 6 for mass colouring polyolefin, polyamide or polyester fibres, which comprises the use of a metal complex according to claim 1.

8. High molecular weight organic material containing a metal complex according to claim 1.